# EUROPEAN PATENT SPECIFICATION

(11) **EP 3 439 773 B1**
(45) Date of publication and mention of the grant of the patent: **09.11.2022**
(21) Application number: 17724445.6
(22) Date of filing: 10.04.2017
(51) Int. Cl.: B01F 25/433, B01F 31/65, B01F 35/92, B01J 19/24

(54) **MODULAR OSCILLATORY FLOW PLATE REACTOR**
MODULARER OSZILLIERENDER STRÖMUNGSPLATTENREAKTOR
RÉACTEUR À PLAQUES À ÉCOULEMENT OSCILLATOIRE MODULAIRE

(30) Priority: 08.04.2016 PT 2016109314
(43) Date of publication of application: 13.02.2019
(73) Proprietor: Universidade do Minho, 4704-553 Braga (PT); Universidade Do Porto, 4099-002 Porto (PT)
(72) Inventor: AZEVEDO FERREIRA, António Manuel, 4200-465 Porto (PT); NOGUEIRA DA ROCHA, Fernando Alberto, 4200-465 Porto (PT); COUTO TEIXEIRA, José António, 4710-057 Braga (PT); CASTRO FREITAS, Filipa Juliana Fernandes, 4200-465 Porto (PT)
(74) Representative: Ferreira, Maria Silvina
(86) International application number: PCT/IB2017/052064
(87) International publication number: WO 2017/175207

(56) References cited:
- EP-A1- 1 992 403
- EP-A1- 2 283 924
- EP-A2- 1 767 263
- WO-A1-2015/056156
- DE-A1-102007 039 713
- US-B1- 6 270 641

## Description

### Technical Field

The present invention relates to an apparatus for mixing based on oscillatory flow plate reactors provided with 2D smooth periodic constrictions.

### Background

Mixing efficiency is the key factor for the success of several processes. Improper mixing can result in non-reproducible processing and lowered product quality. Stirred tank reactor (STR) is commonly used at the industry, however, problems associated with bad mixing, scale up, product quality and process reproducibility, are typically reported. In order to overcome these limitations, associated to the conventional stirred tank reactors, oscillatory flow reactors (OFR) [2,3] and static mixer [4-6] are used. Static mixer is characterized by its small size, intense mixing and enhanced mass and heat transfer. However, as the mixing in these units depends on superficial velocity, the desired mixing is, normally, achieved by increasing the fluid flow or mixer units, a disadvantage in some processes. Unlike static mixers the mixing in OFR can be improved without changing the solution flow and unit numbers, furthermore, it can be operated in batchwise or continuously, flexibility especially relevant to the industry.

OFR is basically a column provided with periodic sharp constrictions, called baffles, operating under oscillatory flow mixing (OFM). The liquid or multiphase fluid is typically oscillated in the axial direction by means of diaphragms, bellows or pistons, at one or both ends of the tube, developing an efficient mixing mechanism where fluid moves from the walls to the centre of the tube with intensity controlled by the oscillation frequency (f) and amplitude (x*₀*). The formation and dissipation of eddies, in these reactors, has proved to result into significant enhancement in processes such as heat transfer, mass transfer, particle mixing and separation[7].

Typically, in order to obtain the best mixing in the OFR the baffle thickness, spacing and open area (α) defined as (orifice diameter (d₀)/ tube diameter (D))², need to be selected and combined with a specific oscillation frequency and amplitude of the fluid. The values of open area (α) are usually disclosed in percentage.

During the last decade, the "conventional" OFR, based on annular baffles, was scaled-down in order to improve the mixing and reduce problems related to the existence of dead zones or stagnant regions near of the baffle, which results in several problems of process and product quality. These mesoscale (millilitre) oscillatory baffled reactors (meso-OFR) have received considerable attention due to their mixing intensification, small volume and ability to operate at low flow rates, reducing reagent requirements and waste. Several baffle designs have been tested in order to obtain the best mixing and a dead zones reduction[8].

Reis et al. [9] re-designed the conventional annular baffles presented at the conventional OFR in order to suit some of the bioprocess applications requirements. The disclosed geometry is based on Smooth Periodic Constrictions (SPCs). The advantages associated with the use of the SPC geometry for a specific biotechnological process at mesoscale were demonstrated. However, the application of the SPC design, suggested by Reis et al., is restricted to one SPC geometry, two inner diameters (around 5 mm) and one system. Furthermore, the application of the SPC design, suggested by Reis et al., to others systems, such as crystallization, results in problems related with secondary nucleation, agglomeration and clogging, beyond others. In order to overcome some of these gaps WO 2015/056156 [1] explore the influence of several geometric parameters, that characterize the SPC design, on reactor performer, at meso and macroscale. The optimized geometric values obtained have been applied to several systems like: bioprocess, gas-liquid absorption, liquid-liquid extraction, precipitation and crystallization, at different scales. Despite the excellent results obtained so far, some specific problems related with solids handlings have been arising, especially, solid deposition and fouling, when low oscillatory conditions need to be imposed.

The present invention fulfils the gaps identified in WO 2015/056156, especially when solids are involved. The present invention relates to an improved apparatus for mixing intensification in multiphase systems, especially when solids are involved, which can be operating in continuous or batch mode. In particular, it relates to a plate reactor, which can be assembled and disassembled easily for cleaning.

EP1767263 discloses a microchip and liquid mixing method.

### Summary

The present invention is defined by an apparatus for mixing intensification according to claim 1.

In an embodiment, the reactor vessel is build-up by stacking up at least two slices resulting in tubes with rectangular or square cross section (xOz section plane) rather than circle cross section.

In other embodiment, the reactor edges can be smoothed.

In another embodiment, the reactor vessel of the apparatus is provided with a at least two of inlets or outlets.

In an embodiment, the reactor vessel of the apparatus is in the form of a single plate reactor or at least two plate reactors, displaced in parallel, by stack up the plates.

In another embodiment, the reactor vessel of the apparatus is totally thermostatized.

In even another embodiment, the jacket on the apparatus is used for mass transfer between the jacket and the reactor vessel or between the reactor vessel and the jacket.

In an embodiment, the mixing chamber of the apparatus is provided with at least two ports for inlet or outlet.

According to the invention, the reactor vessel of the apparatus has the distance (L) between consecutive convergent sections 1 to 5 times the tube width (D_{w}) of the straight section.

Further according to the invention, the reactor vessel of the apparatus has the convergent - divergent section length (L₁) 0.5 to 3 times the tube width (D_{w}) of the straight section.

The reactor vessel of the apparatus has the shortest tube width (d_{0w}) of the convergent - divergent section 0.1 to 0.5 times the tube width (D_{w}) of the straight section.

The reactor vessel of the apparatus has the open area (α), defined as d_{0w}/D_{w}, between 10 and 50%;

The reactor vessel of the apparatus has the radius of curvature (R_{c}) of the sidewall of the convergent section 0.1 to 0.5 times the tube width (D_{w}) of the straight section.

The reactor vessel of the apparatus has the radius of curvature (R_{d}) of the sidewall of the divergent section 0.1 to 0.5 times the tube width (D_{w}) of the straight section.

The reactor vessel of the apparatus has the radius of curvature (Rₜ) at the convergent - divergent section centre of the reactor 0.1 to 0.5 times the tube width (D_{w}) of the straight section.

In an embodiment, the reactor vessel of the apparatus has the thickness (ω) perpendicular to x0y plane 0.2 to 3 times the tube width (D_{w}) of the straight section. The present application also discloses the use of the apparatus in multiphase applications such as screening reactions, bioprocess, gas-liquid absorption, liquid-liquid extraction, precipitation and crystallization.

### General description

The present application relates to an apparatus for mixing based on oscillatory flow plate reactors provided with 2D smooth periodic constrictions. This apparatus can be used in multiphase applications such as screening reactions, bioprocess, gas-liquid absorption, liquid-liquid extraction, precipitation and crystallization.

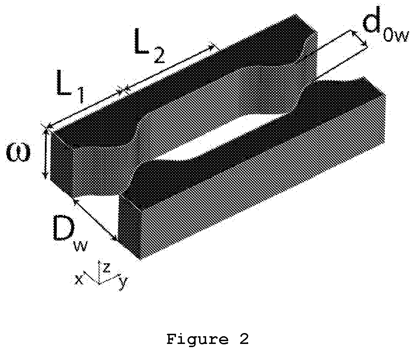

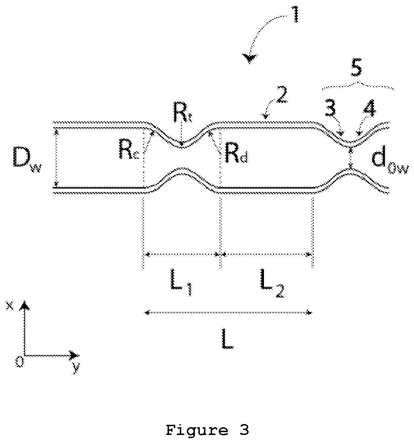

The objective of the technology now disclosed is to provide an improved apparatus for mixing intensification in multiphase systems, especially the ones involving solids, which can be operated in continuous or batch mode. So, based on theoretical and experimental observations using different 2D-SPC geometries, as illustrated on Figures 2 and 3, the present technology presents new dimensions' ranges that fulfil some of the gaps observed in WO 2015/056156, especially when solids are involved. The geometrical parameters studied were: tube width (D_{w}) ; shortest tube width in the constrictions (d0_{w}); thickness (ω); mean spacing between consecutive constrictions (L₁+L₂); constriction length (L₁); straight tube length (L₂); open area (α), defined as d_{0w}/D_{w}, rather than (orifice diameter (d₀)/ tube diameter (D))² used in tubes with circle cross section; radius of curvature (R_{c}) of the sidewall of the convergent section (3); radius of curvature (R_{d}) of the sidewall of the divergent section (4); and, radius of curvature (Rₜ) at the convergent - divergent section (5) centre.

The 2D-SPC geometries here disclosed decrease the problems related with solid handling, especially, solid deposition and fouling, identified in the OFRs presented by WO 2015/056156 [1], and increase its possible use in systems, for instance, in crystallization.

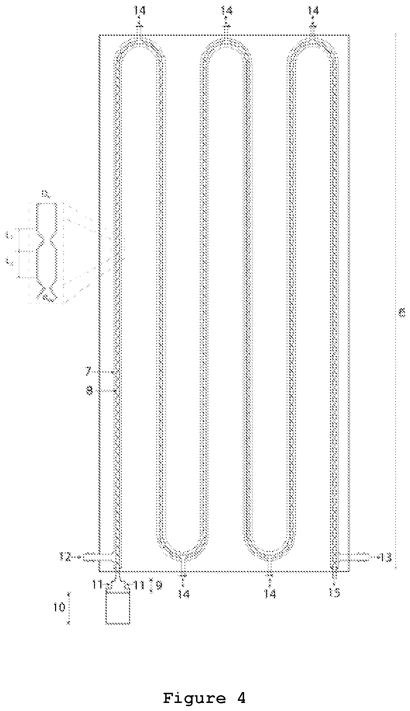

The apparatus that comprises the novel oscillatory flow plate reactor (OFPR) provided with 2D Smooth Periodic Constrictions (2D-SPCs), hereinafter OFPR-2D-SPC, based on the claimed dimensions, is presented as a plate, as disclosed on Figure 4. The OFPR-2D-SPC is build-up by stacking up at least two slices resulting in tubes with rectangular or square cross section (xOz section plane) rather than circle cross section presented in WO 2015/056156 [1]. The tube edges can be smoothed.

The OFPR-2D-SPC can be assembled and disassembled easily for cleaning.

The plates can be arranged in parallel by stacking up the plates. This modular system permits the OFPR-2D-SPC use in most of the industrial applications. The plates are fully thermostatized and can be operated in batchwise or continuously.

In order to provide the liquid or multiphase fluid oscillation in the OFPR-2D-SPC, an oscillatory unit is used.

### Brief description of the Figures

For a better understanding of the technology, some figures are attached representing preferred embodiments of the present technology which, however, are not to be construed as being limiting other possible embodiments falling within the scope of the invention as it is defined by the claims.

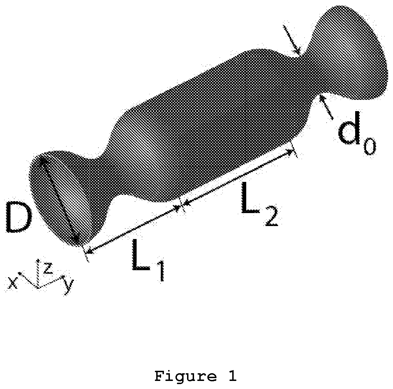

Figure 1 illustrates the state of the art of the reactor based on Smooth Periodic Constrictions used in tubes with circle cross section. In particular, Figure 1 illustrates the following elements:
   D - Inner diameter of the straight section;
   d₀- Shortest diameter of the convergent - divergent section;
   L₁ - Convergent - divergent section length;
   L₂ - Straight section length;
Figure 2 illustrates a view of the reactor, identifying the design and the parameters that characterize the present technology. In particular, Figure 2 illustrates the following elements:
   D_{w} - Tube width of the straight section;
   d_{0w} - Shortest tube width of the convergent - divergent section;
   L₁ - Convergent - divergent section length;
   L₂ - Straight section length;
   ω - Thickness perpendicular to x0y plane.
Figure 3 illustrates a sectional view of the reactor, identifying the design and the parameters that characterize the present technology. In particular, Figure 3 illustrates the following elements:
   1 - Reactor;
   2 - Straight section;
   3 - Convergent section;
   4 - Divergent section;
   5 - Convergent - divergent section;
   D_{w} - Tube width of the straight section;
   d_{0w} - Shortest tube width of the convergent - divergent section;
   L - Distance between consecutive convergent sections;
   L₁ - Convergent - divergent section length;
   L₂ - Straight section length;
   R_{c} - Radius of curvature of the sidewall of the convergent section;
   R_{d} - Radius of curvature of the sidewall of the divergent section;
   Rₜ - Radius of curvature at the convergent - divergent section centre.
Figure 4 illustrates a plan view of the oscillatory flow reactor apparatus based on plate reactor. In particular, Figure 4 illustrates the following elements:
   6 - plate reactor;
   7 - jacket;
   8 - reactor vessel based on 2D-SPC;
   9 - mixing chamber;
   10 - oscillatory unit;
   11 - reactor inlet;
   12 - jacket inlet;
   13 - jacket outlet;
   14 - inlet or outlet;
   15 - reactor exit.
   D_{w} - tube width of the straight section;
   d_{0w} - Shortest tube width of the convergent - divergent section;
   L₁ - Convergent - divergent section length;
   L₂ - Straight section length.

### Description of embodiments

The present technology will now be described with reference to the accompanying figures, which however are not to be construed as being limiting other possible embodiments falling within the scope of the invention as it is defined by the claims.

The present application relates to an apparatus for mixing based on oscillatory flow plate reactors provided with 2D smooth periodic constrictions. The present technology comprises dimensions ranges that characterize the reactor vessel provided with 2D smooth periodic constrictions (Figure 2 and 3), here defined as convergent - divergent section (5), and its arrangement in plates, as illustrated on Figures 4.

According to the invention, the said apparatus comprises a plate reactor provided with a reactor vessel (8) provided with smooth periodic constrictions (SPC), wherein the said smooth periodic constrictions (SPC) are present in two parallel faces of the rectangular or square cross section tube, characterizing the 2D smooth periodic constrictions; a mixing chamber (9); and oscillation means to oscillate the liquid or multiphase fluid within the reactor vessel.

The reactor vessel (8) may be made of metal, plastic, glass or any porous material. The reactor vessel (8) is characterized by a bundle of reactors (1), as illustrated on Figure 2 and 3, that have alternatively straight sections (2) and convergent - divergent sections (5). Each convergent - divergent section (5) consists of a convergent section (3) and a divergent section (4). The convergent section (3) gradually reduces its tube width, and the divergent section (4) presents a gradually increasing the tube width. The shortest tube width, obtained at the junction of convergent section (3) and divergent section (4), is defined as d_{0w}. The tube width (D_{w}) of the straight section (2) is larger than d_{0w}. The convergent and divergent sections have a curved sidewall defined by the radius of curvature (R_{c}) of the sidewall of the convergent section (3), the radius of curvature (R_{d}) of the sidewall of the divergent section (4) and the radius of curvature (Rₜ) at the convergent - divergent section (5) centre.

In order to obtain the best mixing condition, the reactor (1) fulfils the following conditions:
1. The distance (L) between consecutive convergent sections (3) is 1 to 5 times the tube width (D_{w}) of the straight section (2). That is L = 1-5D_{w};
2. The convergent - divergent section (5) length (L₁) is 0.5 to 3 times the tube width (D_{w}) of the straight section (2). That is L₁ = 0.5-3D_{w};
3. The shortest width (d_{0w}) of the convergent - divergent section (5) is 0.1 to 0.5 times the tube width (D_{w}) of the straight section (2). That is d_{0w} = 0.1-0.5D_{w};
4. The radius of curvature (R_{c}) of the sidewall of the convergent section (3) is 0.1 to 0.5 times the tube width (D_{w}) of the straight section (2). That is R_{c} = 0.1-0.5D_{w};
5. The radius of curvature (R_{d}) of the sidewall of the divergent section (4) is 0.1 to 0.5 times the tube width (D_{w}) of the straight section (2). That is R_{d} = 0.1-0.5D_{w};
6. The radius of curvature (Rₜ) at the convergent - divergent section (5) centre is 0.1 to 0.5 times the tube width (D_{w}) of the straight section (2). That is Rₜ = 0.1-0.5D_{w};
7. The open area (α) takes the values range between 10% and 50%.

The reactor vessel (8) characterized by a bundle of reactors (1) is incorporated in a plate reactor (6), as illustrated on Figures 4.

The plate reactor (6) comprises a continuous serpentine reactor vessel (8), characterized by a bundle of reactors (1), and an external tube used as jacket (7) for reactor vessel (8) thermostatization, or mass transfer, if reactor vessel (8) is made of porous material. The plate reactor (6) is build-up by stacking up at least two slices resulting in tubes with rectangular or square cross section (xOz section plane), rather than circle cross section presented in WO 2015/056156 [1], with a thickness perpendicular to x0y plane (ω). The edges of the reactor vessel (8) can be smoothed. The jacket (7) has an inlet (12) and an outlet (13). This reactor vessel (8) has at least two inlets or outlets (14), to allow the addition of reactants or other substances, or sample collection. The plate reactor (6) can be arranged in parallel by stacking up the plates. The plate reactors (6) are connected by U tubes. The first plate reactor (6) is connected to an oscillatory unit (10), which induces a simple harmonic motion to the fluid in the reactor vessel (8), by a mixing chamber (9) provided with at least two inlets (11).

Figure 4 shows a plan view of the oscillatory flow reactor apparatus based on plate reactor (6), constituted by an inner tube with rectangular or square cross section (xOz section plane), here defined as reactor vessel (8), presenting a bundle of reactors (1), an external tube used as jacket (7) for reactor vessel (8) thermostatization, or mass transfer if reactor vessel (8) is made of porous material, and at least two inlets or outlets (14), to allow the addition of reactants or other substances, or sample collection.

The plate reactors (6) can be closed using a close valve at reactor exit (15).

The number, size and length of plate reactor (6) are designed according to the system specification.

The plate reactors (6) can be operated in batchwise or continuously.

The liquid or multiphase fluids are fed to the reactor vessel (8) through the inlets (11) of the mixing chamber (9).

The liquid or multiphase fluid is oscillated in the axial direction by means of oscillatory unit (10), developing an efficient mixing mechanism where fluid moves from the walls to the centre of the tube with intensity controlled by the oscillation frequency (f) and amplitude (x₀). The formation and dissipation of eddies in the reactor results into significant enhancement in processes such as heat transfer, mass transfer, particle mixing and separation, beyond others.

The reactor will obtain the optimum mixing conditions when:
1. The distance (L) between consecutive convergent sections (3) is 1 to 5 times the tube width (D_{w}) of the straight section (2), preferably 3D;
2. The convergent - divergent section (5) length (L₁) is 0.5 to 3 times the tube width (D_{w}) of the straight section (2), preferably 1.44D;
3. The shortest tube width (d_{0w}) of the convergent - divergent section (5) is 0.1 to 0.5 times the tube width (D_{w}) of the straight section (2), preferably 0.41D;
4. The radius of curvature (R_{c}) of the sidewall of the convergent section (3) is 0.1 to 0.5 times the tube width (D_{w}) of the straight section (2), preferably 0.47D;
5. The radius of curvature (R_{d}) of the sidewall of the divergent section (4) is 0.1 to 0.5 times the tube width (D_{w}) of the straight section (2), preferably 0.47D;
6. The radius of curvature (Rₜ) at the convergent - divergent section (5) centre is 0.1 to 0.5 times the tube width (D_{w}) of the straight section (2), preferably 0.32D;
7. The thickness perpendicular to x0y plane (ω) is 0.2 to 3 times the tube width (D_{w}) of the straight section (2), preferably 0.63D;
8. The open area (α) takes the values range between 10% and 50%, preferably, 41%;
9. The oscillation frequency of the medium is between 1 and 12 Hz;
10. The oscillation amplitude of the medium is between 0 and 0.5 times the distance (L) between consecutive convergent sections (3).

The disclosed technology can be used in mass and heat transfer intensification. In particular, the disclosed technology can be used in mixing intensification between liquid/liquid, liquid/gas and liquid/solid phases.

The disclosed technology overcomes the disadvantages of the conventional OFR, based on annular baffles, especially in what concerns the dead zones decreasing and the quick cleaning process. The disclosed technology also overcomes the disadvantages of the meso-OFR based on SPC, especially in what concerns the decrease of the secondary nucleation, agglomeration and clogging problems. The present invention fulfils the gaps identified in WO 2015/056156, especially when solids are involved, namely, solid deposition and fouling, when low oscillatory conditions need to be imposed.

The disclosed technology relates to a plate reactor, which can be assembled and disassembled easily for cleaning.

As the disclosed technology is based on a modular system, it allows a quick reactor change according to industries' needs, a distinguishing and striking characteristic of other reactors.

The disclosed technology can be operated in batchwise or continuously, this characteristic being of particular relevance in chemical, bio-chemical, biological and pharmaceutical industry.

The disclosed technology offers unique features in comparison with conventional chemical reactors. It is suitable for multiphase applications such as screening reactions, bioprocess, gas-liquid absorption, precipitation and crystallization operating in batch or continuous mode.

### References

[1] A. Ferreira, F. Rocha, J.A. Teixeira, A. Vicente, Apparatus for mixing improvement based on oscillatory flow reactors provided with smooth periodic constrictions, WO/2015/056156, 2015.
[2] M.R. Mackley, R.L. Skelton, K.B. Smith, Processing of liquid/solid mixtures using pulsations, GB 2 276 559 A, 1994.
[3] X. Ni, K.. Murray, Y. Zhang, D. Bennett, T. Howes, Polymer product engineering utilising oscillatory baffled reactors, Powder Technol. 124 (2002) 281-286. doi:10.1016/S0032-5910(02)00022-0.
[4] R.K. Thakur, C. Vial, K.D.P. Nigam, E.B. Nauman, G. Djelveh, Static mixers in the process industries -a review, Chem. Eng. Res. Des. 81 (2003).
[5] J.C.B. Lopes, P. Laranjeira, M. Dias, A. Martins, Network mixer and related mixing process, US 2009/0016154 A1, 2009.
[6] P.E.M.S.C. Laranjeira, NETMIX Static Mixer - Modelling, CFD simulation and Experimental Characterisation, Faculdade de Engenharia, Universidade do Porto, 2005.
[7] T. McGlone, N.E.B. Briggs, C.A. Clark, C.J. Brown, J. Sefcik, A.J. Florence, Oscillatory Flow Reactors (OFRs) for Continuous Manufacturing and Crystallization, Org. Process Res. Dev. 19 (2015) 1186-1202. doi:10.1021/acs.oprd.5b00225.
[8] J.R. McDonough, a. N. Phan, a. P. Harvey, Rapid process development using oscillatory baffled mesoreactors - A state-of-the-art review, Chem. Eng. J. 265 (2015) 110-121. doi:10.1016/j.cej.2014.10.113.
[9] N.M.F. Reis, Novel Oscillatory Flow Reactors for Biotechnological Applications, Minho University, 2006.

## Claims

1. An apparatus suitable for mixing intensification comprising:
- A plate reactor (6) provided with a reactor vessel (8) provided with smooth periodic constrictions (SPC), the reactor vessel (8) comprising a bundle of reactors (1) having alternatively straight sections (2) and convergent
- divergent sections (5), each convergent - divergent section (5) consisting of a convergent section (3) and a divergent section (4), wherein a distance L between consecutive convergent sections is defined by:
a length L₂ of the straight section (2) of width D_{w} and a length L₁ of the convergent-divergent section (5); said length L₁ comprising a radius R_{c} of curvature of a sidewall of the convergent section (3), a radius of curvature R_{d} of a sidewall of the divergent section (4), and a radius of curvature Rₜ at the convergent - divergent section centre;
said length L₁ further comprising an open area α defined as the shortest tube width d_{0w} of the convergent - divergent section (5) divided by the width D_{w}, wherein:
- the distance L is 1 to 5 times the width D_{w};
- L₁ is 0.5 to 3 times the width D_{w};
- the width d_{0w} of the convergent-divergent section (5) is 0.1 to 0.5 times the width D_{w};
- R_{c} is 0.1 to 0.5 times the width D_{w};
- R_{d} is 0.1 to 0.5 times the width D_{w};
- Rₜ is 0.1 to 0.5 times the width D_{w};
- the open area α has values between 10 and 50%;
- wherein said smooth periodic constrictions (SPC) are present in two parallel faces of a rectangular or square cross section tube, defining the 2D smooth periodic constrictions (SPC);
- A mixing chamber (9);
- Oscillation means to oscillate a liquid or multiphase fluid within the reactor vessel (8).

2. An apparatus according to the previous claim, wherein said plate reactor (6) is build-up by stacking two or more slices resulting in tubes with rectangular or square cross section.

3. An apparatus according to any of the previous claims, wherein said reactor vessel (8) is provided with smooth edges.

4. An apparatus according to any of the previous claims, wherein said reactor vessel (8) is provided with at least two inlets or outlets (14).

5. An apparatus according to any of the previous claims, wherein said reactor plate (6) is assemblable and disassemblable.

6. An apparatus according to any of the previous claims, wherein said reactor vessel (8) is in the form of single plate reactor (6) or at least two plate reactors (6), displaced in parallel, by stack up the plates.

7. An apparatus according to any of the previous claims, wherein said reactor vessel (8) is totally thermostatized.

8. An apparatus according to any of the previous claims, wherein the said apparatus comprises a jacket (7).

9. An apparatus according to any of the previous claims, wherein the mixing chamber (9) is provided with at least two inlet or outlet ports (11).

10. An apparatus according to any of the previous claims, wherein the thickness perpendicular to x0y plane (ω) is 0.2 to 3 times the tube width (D_{w}) of the straight section (2) .

11. Use of the apparatus disclosed in any one of the previous claims in multiphase applications such as screening reactions, bioprocess, gas-liquid absorption, liquid-liquid extraction, precipitation and crystallization.

## Patentansprüche

1. Vorrichtung, geeignet zur Mischintensivierung umfassend:
- Einen Plattenreaktor (6) mit einem Reaktorbehälter (8), der mit glatten periodischen Einschnürungen (SPC) versehen ist, wobei der Reaktorbehälter (8) ein Bündel von Reaktoren (1) umfasst, die abwechselnd gerade Abschnitte (2) und konvergente-divergente Abschnitte (5) aufweisen, wobei jeder konvergente-divergente Abschnitt (5) aus einem konvergenten Abschnitt (3) und einem divergenten Abschnitt (4) besteht, wobei der Abstand L zwischen aufeinanderfolgenden konvergenten Abschnitten definiert ist durch:
eine Länge L₂ des geraden Abschnitts (2) mit einer Breite D_{w} und eine Länge L₁ des konvergent-divergenten Abschnitts (5); wobei die genannte Länge L₁ einen Krümmungsradius R_{c} einer Seitenwand des konvergenten Abschnitts (3), einen Krümmungsradius R_{d} einer Seitenwand des divergenten Abschnitts (4) und einen Krümmungsradius Rₜ an der Mitte des konvergenten-divergenten Abschnitts umfasst;
wobei die genannte Länge L₁ ferner einen offenen Bereich α umfasst, der als die kürzeste Rohrbreite d_{0w} des konvergenten-divergenten Abschnitts (5) definiert ist, geteilt durch die Breite D_{w}, wobei:
- der Abstand L das 1- bis 5-fache der Breite D_{w} beträgt;
- L₁ das 0,5- bis 3-fache der Breite D_{w} beträgt;
- die Breite d_{0w} des konvergent-divergenten Abschnitts (5) 0,1- bis 0,5-mal so groß wie die Breite D_{w} ist;
- R_{c} das 0,1- bis 0,5-fache der Breite D_{w} ist;
- R_{d} das 0,1- bis 0,5-fache der Breite D_{w} ist;
- Rₜ das 0,1- bis 0,5-fache der Breite D_{w} ist;
- der offene Bereich α Werte zwischen 10 und 50 % hat; wobei die genannten glatten periodischen Einschnürungen (SPC) in zwei parallelen Flächen eines Rohrs mit rechteckigem oder quadratischem Querschnitt vorhanden sind, die die 2D glatten periodischen Einschnürungen (SPC) definieren;
- Eine Mischkammer (9);
- Oszillationsmittel, um ein flüssiges oder mehrphasiges Fluid innerhalb des Reaktorbehälters (8) zu oszillieren.

2. Vorrichtung nach dem vorhergehenden Anspruch, wobei der Plattenreaktor (6) durch Stapeln von zwei oder mehr Scheiben aufgebaut ist, was zu Rohren mit rechteckigem oder quadratischem Querschnitt führt.

3. Vorrichtung nach einem der vorhergehenden Ansprüche, wobei der Reaktorbehälter (8) mit glatten Kanten versehen ist.

4. Vorrichtung nach einem der vorhergehenden Ansprüche, wobei der Reaktorbehälter (8) mit mindestens zwei Einlässen oder Auslässen (14) versehen ist.

5. Vorrichtung nach einem der vorhergehenden Ansprüche, wobei die Reaktorplatte (6) zusammensetzbar und auseinandernehmbar ist.

6. Vorrichtung nach einem der vorhergehenden Ansprüche, wobei der Reaktorbehälter (8) die Form eines einzelnen Plattenreaktors (6) oder mindestens zweier Plattenreaktoren (6) hat, die durch Aufeinanderstapeln der Platten parallel verschoben sind.

7. Vorrichtung nach einem der vorhergehenden Ansprüche, wobei der Reaktorbehälter (8) vollständig thermostatisiert ist.

8. Vorrichtung nach einem der vorhergehenden Ansprüche, wobei die Vorrichtung einen Mantel (7) umfasst.

9. Vorrichtung nach einem der vorhergehenden Ansprüche, wobei die Mischkammer (9) mit mindestens zwei Einlass- oder Auslassöffnungen (11) versehen ist.

10. Vorrichtung nach einem der vorhergehenden Ansprüche, wobei die Dicke senkrecht zur x0y-Ebene (ω) das 0,2- bis 3-fache der Rohrbreite (D_{w}) des geraden Abschnitts (2) beträgt.

11. Verwendung der in einem der vorhergehenden Ansprüche offenbarten Vorrichtung bei Mehrphasenanwendungen wie Screening-Reaktionen, Bioprozessen, Gas-Flüssig-Absorption, Flüssig-Flüssig-Extraktion, Ausfällung und Kristallisation.

## Revendications

1. Appareil adapté pour une intensification de mélange comprenant :
- un réacteur à plaques (6) fourni avec une cuve de réacteur (8) fournie avec des étranglements périodiques doux (SPC), la cuve de réacteur (8) comprenant un faisceau de réacteurs (1) ayant alternativement des sections droites (2) et des sections convergentes - divergentes (5), chaque section convergente - divergente (5) étant constituée d'une
- section convergente (3) et d'une
- section divergente (4), dans lesquelles la distance L entre des sections convergentes consécutives est définie par :
une longueur L₂ de la section droite (2) de largeur D_{w} et une longueur L₁ de la section convergente - divergente (5) ;
ladite longueur L₁ comprenant un rayon R_{c} de courbure d'une paroi latérale de la section convergente (3), un rayon de courbure R_{d} d'une paroi latérale de la section divergente (4), et un rayon de courbure Rₜ sur le centre de la section convergente - divergente ;
ladite longueur L₁ comprenant en outre une zone ouverte α définie comme la largeur de tube la plus courte d_{0w} de la section convergente - divergente (5) divisée par la largeur D_{w} dans laquelle :
- la distance L est de 1 à 5 fois la largeur D_{w} ;
- L₁ est de 0,5 à 3 fois la largeur D_{w} ;
- la largeur d_{0w} de la section convergente - divergente (5) est de 0,1 à 0,5 fois la largeur D_{w} ;
- R_{c} est de 0,1 à 0,5 fois la largeur D_{w} ;
- R_{d} est de 0,1 à 0,5 fois la largeur D_{w} ;
- Rₜ est de 0,1 à 0,5 fois la largeur D_{w} ;
- la zone ouverte α a des valeurs comprises entre 10 et 50 % ;
- dans laquelle lesdits étranglements périodiques doux (SPC) sont présent dans deux faces parallèles d'un tube de section transversale rectangulaire ou carrée, définissant les étranglements périodiques doux (SPC) 2D ;
- Une chambre de mélange (9) ;
- Un moyen d'oscillation pour faire osciller un fluide liquide ou multiphasique à l'intérieur de la cuve de réacteur (8) .

2. Appareil selon l'une quelconque des revendications précédentes, dans lequel ledit réacteur à plaques (6) est construit par l'empilement de deux tranches ou plus résultant en des tubes avec une section transversale rectangulaire ou carrée.

3. Appareil selon l'une quelconque des revendications précédentes, dans lequel ladite cuve de réacteur (8) est fournie avec des bords doux.

4. Appareil selon l'une quelconque des revendications précédentes, dans lequel ladite cuve de réacteur (8) est fournie avec au moins deux entrées ou sorties (14).

5. Appareil selon l'une quelconque des revendications précédentes, dans lequel ladite plaque de réacteur (6) est assemblable et démontable.

6. Appareil selon l'une quelconque des revendications précédentes, dans lequel ladite cuve de réacteur (8) est sous la forme d'un réacteur à plaque unique (6) ou de réacteurs à au moins deux plaques (6), déplacées en parallèle, par un empilement des plaques.

7. Appareil selon l'une quelconque des revendications précédentes, dans lequel ladite cuve de réaction (8) est totalement thermostatée.

8. Appareil selon l'une quelconque des revendications précédentes, dans lequel ledit appareil comprend une gaine (7) .

9. Appareil selon l'une quelconque des revendications précédentes, dans lequel la chambre de mélange (9) est fournie avec au moins deux orifices d'entrée ou de sortie (11) .

10. Appareil selon l'une quelconque des revendications précédentes, dans lequel l'épaisseur perpendiculaire au plan x0y (ω) est de 0,2 à 3 fois la largeur du tube (D_{w}) de la section droite (2).

11. Utilisation de l'appareil divulgué selon l'une quelconque des revendications précédentes dans des applications multiphasiques telles que les réactions de filtrage, les bioprocédés, l'absorption gaz-liquide, l'extraction liquide-liquide, la précipitation et la cristallisation.
